(19) **Europäisches Patentamt / European Patent Office / Office européen des brevets**

(11) **EP 4 768 857 A1**

(12) # EUROPEAN PATENT APPLICATION

(43) Date of publication:
**01.07.2026 Bulletin 2026/27**

(21) Application number: **25220727.9**

(22) Date of filing: **04.12.2025**

(51) International Patent Classification (IPC):
*G01C 21/00* (2006.01)

(52) Cooperative Patent Classification (CPC):
**G01C 21/3815; G01C 21/3833; G01C 21/3867**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 CN 202411976138**

(71) Applicant: **Robert Bosch GmbH
70442 Stuttgart (DE)**

(72) Inventors:
• **WANG, Leichen
Shanghai 200335 (CN)**
• **LI, Xinrun
Shanghai 200335 (CN)**

(54) **METHOD, CONTROLLER, VEHICLE, AND PRODUCT FOR UPDATING LANE LINES ON A MAP**

(57) The present disclosure relates to a method for updating lane lines on a map. The method comprises obtaining a first set of sampling points of lane lines from a map and obtaining a second set of sampling points of lane lines in a driving scenario based on vehicle sensor information. The method further comprises updating the first set of sampling points on the map based on the positional relationship between the first set of sampling points and the second set of sampling points. In this way, existing maps and current sensor information can be fused to update the position of map points based on lane line detection points in real driving scenarios. Moreover, global lane lines can be formed based on the map's topology, thereby avoiding the limitations of sensor detection range and enabling the updating and expansion of perception results. As such, examples of the present disclosure are capable of increasing the accuracy of lane line updates on a map.

FIG. 2

**Description**

Technical Field

Examples of the present disclosure relate generally to the field of intelligent driving, and in particular to methods, apparatuses, controllers, vehicles, and program products for updating lane lines on a map.

Background

In the field of driving, various map applications have become indispensable tools in the driving process. For example, an in-vehicle Global Positioning System (GPS) can be used in conjunction with map applications to make it easier for users to know the shortest or fastest route to a destination. Furthermore, the map application can provide real-time updates to users while they are driving.

When driving, users can make timely decisions based on information provided by the map application, such as turning or going straight. However, with the development of intelligent driving, users' requirements for map applications are constantly increasing. High accuracy and stability, strong satellite system coverage, fast response speed, and convenient interaction methods have become important development directions for map applications.

Summary of the Invention

Examples of the present disclosure provide a method, apparatus, controller, vehicle, and program product for updating lane lines on a map.

In a first aspect of the present disclosure, a method for updating lane lines on a map is provided. The method comprises acquiring a first set of sampling points of lane lines from a map. The method further comprises acquiring a second set of sampling points of lane lines in the driving scenario based on vehicle sensor information. In addition, the method further comprises updating the first set of sampling points on the map based on the positional relationship between the first set of sampling points and the second set of sampling points.

In a second aspect of the present disclosure, an apparatus for updating lane lines on a map is provided. The apparatus comprises an acquisition module for a first set of sampling points configured to acquire a first set of sampling points of lane lines from a map. The apparatus further comprises an acquisition module for a second set of sampling points configured to acquire a second set of sampling points of lane lines in a driving scenario based on vehicle sensor information. In addition, the apparatus further comprises a module for updating a first set of sampling points configured to update the first set of sampling points on the map based on the positional relationship between the first set of sampling points and the second set of sampling points.

In a third aspect of the present disclosure, a controller is provided. The controller comprises at least one processor. The controller further comprises a memory coupled to the at least one processor and having instructions stored thereon, wherein the instructions, when executed by the at least one processor, cause the controller to perform the method provided according to the first aspect.

According to a fourth aspect of the present disclosure, a vehicle is provided. The vehicle comprises a controller provided according to the third aspect of the present disclosure. The vehicle further comprises sensors for acquiring the sensor information of the vehicle.

In a fifth aspect of the present disclosure, a machine program product is provided, comprising a machine program which is executed by a processor to implement the method provided according to the first aspect.

In a sixth aspect of the disclosure, a machine-readable storage medium is provided. The machine-readable storage medium has machine-executable instructions stored thereon, wherein the machine-executable instructions are executed by a processor to implement the method provided according to the first aspect of the present disclosure.

It will be understood that the description in the Summary of the Invention is not intended to limit key or important features of the examples of the present disclosure, nor is it intended to limit the scope of the present disclosure. Other features of the present disclosure will become readily understood by the following description.

Brief Description of the Drawings

Above and other features, advantages and aspects of various examples of the present disclosure will become more apparent in combination with the accompanying drawings and with reference to the following detailed description. In the accompanying drawings, like or similar reference signs designate like or similar elements, wherein:

FIG. 1 shows a schematic diagram of an example environment in which some examples of the present disclosure may be implemented;

# EP 4 768 857 A1

FIG. 2 shows a flow chart of a method for updating lane lines on a map in some examples of the present disclosure;

FIG. 3A shows a schematic diagram of a road based on region division on a map in some examples of the present disclosure;

FIG. 3B shows a schematic diagram of another road based on region division on a map in some examples of the present disclosure;

FIG. 4 shows a schematic diagram of the relationship between map points and detection points in some examples of the present disclosure;

FIG. 5A shows a schematic diagram of a process for calculating distances based on map points and detection points in some examples of the present disclosure;

FIG. 5B shows a schematic diagram of another process for calculating distances based on map points and detection points in some examples of the present disclosure;

FIG. 6A shows a schematic diagram of a process for calculating curvature based on map points in some examples of the present disclosure;

FIG. 6B shows a schematic diagram of another process for calculating curvature based on map points in some examples of the present disclosure;

FIG. 7 shows a schematic diagram of a process for updating lane lines on a map in some examples of the present disclosure;

FIG. 8 shows a block diagram of an apparatus for updating lane lines on a map in some examples of the present disclosure; and

FIG. 9 shows a schematic block diagram of a controller in some examples of the present disclosure.

In all figures, like or similar reference signs represent like or similar elements.

Detailed Description of the Embodiments

The examples of the present disclosure will be described in further detail below with reference to the accompanying drawings. Although certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples disclosed herein, the term "comprise" and similar terms should be understood as open-ended inclusion, meaning "including but not limited to." The term "based on" should be understood as "at least partially based on." The term "one example" or "this example" should be understood as "at least one example." The terms "first," "second," etc., can refer to different or the same objects. Other explicit and implicit definitions may be included below.

As elements such as lane lines on high-definition maps (HD maps), HD-Lite (a lightweight version of high-precision maps), and SD pro (a type of map between navigation maps and high-definition maps, with lower precision than high-precision maps) have geometric uncertainties and low precision, the points on high-precision maps often have certain errors. As time goes by, the positions of points on the map may also change, resulting in freshness issues for these points. Moreover, maps that are not updated in a timely manner often cannot be used directly when road conditions change too frequently (e.g., in urban areas). For advanced driving functions such as autonomous driving, lane lines read from maps, which are uncertain and have low precision, can easily lead to driving decision errors.

Related technologies also use sensors such as vehicle cameras to detect lane lines, thereby obtaining lane line information. However, the lane lines detected at different times or locations in related methods lack topological information, making it impossible to form a continuous lane line, and the detected lane lines are affected by the detection range of the detector. Therefore, the lane lines obtained by sensor-based detection of the driving environment in related technologies cannot describe the global information of the lane lines.

To this end, examples of the present disclosure provide a method for updating lane lines on a map, which involves sampling map points describing lane lines from the map, determining detection points describing lane lines based on real-time sensor information obtained from sensor detection of driving scenarios, and then updating the positions of the map points according to the positional relationship between the map points and the detection points, thereby fusing the map points and the detection points to update the lane lines on the map. In this way, existing maps and current sensor information can be fused to update the position of map points based on lane line detection points in real driving scenarios. Moreover, global lane lines can be formed based on the map's topology, thereby avoiding the limitations of sensor detection range and enabling the updating and expansion of perception results. As such, examples of the present disclosure are capable of increasing the accuracy of lane line updates on maps.

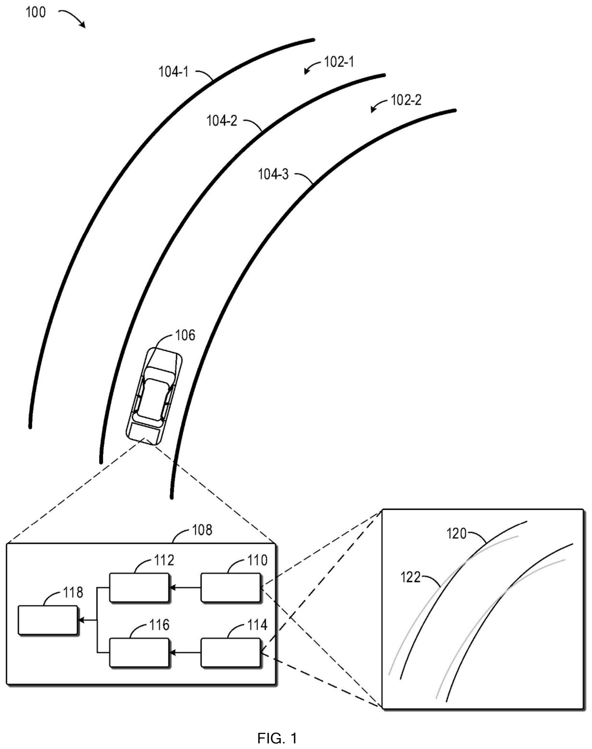

FIG. 1 shows a schematic diagram of an example environment 100 in which some examples of the present disclosure may be implemented. In some examples, the example environment 100 describes a vehicle 106 driving on a road that comprises a left lane 102-1 and a right lane 102-2. Furthermore, the left lane 102-1 has a lane line 104-1 and a lane line 104-2, and the right lane 102-2 has a lane line 104-2 and a lane line 104-3. It will be understood that the description of roads in the example environment 100 is merely an example and not a limitation.

Accurately describing the road scene in the example environment 100 is a fundamental and important task for vehicle control systems such as Advanced Driver Assistance Systems (ADAS) during the process of the vehicle 106 making decisions and controlling its driving path. To ensure that the vehicle 106 is driving in the correct position, the vehicle control system needs to clearly define the lane it is traveling in and the boundary lines (i.e., lane lines) between lanes (or regions outside the road). For example, in the example environment 100, the vehicle 106 needs to determine the left lane 102-1, the right lane 102-2, the lane line 104-1, the lane line 104-2, and the lane line 104-3 to make accurate path planning.

The controller 108 is used to implement the vehicle control system described above, thereby analyzing the various types of information such as the map information and sensor information of the vehicle 106 in the course of driving and making decisions about the driving process. In some examples, the controller 108 comprises, but is not limited to, the vehicle's autonomous driving domain controller, chassis domain controller, body controller, engine controller, vehicle controller, or any combination of the above controllers. In some examples, the controller 108 may communicate with remote devices such as servers or cloud platforms.

In some examples, the controller 108 acquires a map 110. The map 110 may be an electronic map stored in the vehicle 106 or an electronic map stored on a remote device. In some examples, the map 110 is a high-precision map. The controller 108 then samples the lane lines from the map 110 to obtain map points 112 (which may be referred to as a first set of sampling points). Correspondingly, the controller 108 acquires the sensor information 114 from the vehicle's sensors. This sensor information 114 is acquired by the sensors from real-time detection of the example environment 100, and may be, for example, images or sets of point clouds. The controller 108 then samples the lane lines from the sensor information 114 to acquire detection points 116 (which may be referred to as a second set of sampling points).

In some examples, the sensors acquire the sensor information 114, and the sensor information 114 is real-time data of the sensors detecting the example environment 100. The controller 108 may then read the sensor information 114 from the sensors and extract the lane lines from the sensor information 114 using a perception algorithm. Further, the controller 108 may extract the detection points 116 from the lane lines using a sampling point matching algorithm. The detection points 116 may be, for example, lane line nodes sensed by a sensor, i.e., intersections formed by the intersection of two or more lane lines. In some examples, sensors include, but are not limited to, cameras, LiDAR (light detection and ranging, a spatial measurement system integrating laser, GPS, and inertial navigation systems for light detection and ranging) and Radar (Radio Detection and Ranging, which uses radio waves to determine the distance, angle, or velocity of an object).

It will be understood that the actual lane lines depicted on the map 110 often differ from those detected by sensors. For example, in order to increase the construction speed of the map 110, lane lines may be constructed on the map 110 according to certain rules, thereby reducing the amount of data and the generation cost of map 110. In this way, the lane lines (e.g., the lane lines 120) on the map 110 may have a certain deviation from the lane lines (e.g., the lane lines 122) detected by the sensors.

After sampling the map point 112 and the detection points 116, the controller 108 updates the map points 112 based on the positional relationship between the map points 112 and the detection points 116, thereby fusing the information in the detection points 116 into the map points 112 and thus forming fusion points 118. In this way, the controller 108 may correct the lanes on the map 110 based on the fusion points 118 to obtain lane lines on the map 110 that incorporate real driving scenario information. It will be understood that the present disclosure does not restrict the execution order of sampling the map points 112 and sampling the detection points 116.

In this way, the controller 108 can fuse the existing map 110 and the current sensor information 114 to update the positions of the map points 112 with the lane line detection points 116 in the real driving scenario. Moreover, the updated map points, namely the fusion points 118, can form global lane lines based on the topology on the map 110, avoiding the limitation of sensor detection range and enabling the updating and expansion of perception results. As such, examples of the present disclosure are capable of increasing the accuracy of lane line updates on the map 110. It should be understood that the architecture and functionality of the example environment 100 are described for exemplary purposes only and do not imply any limitation on the scope of the present disclosure. Examples of the present disclosure may also be applied to other environments having different structures and/or functions.

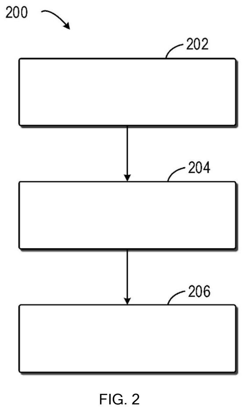

The process according to examples of the present disclosure will be described in detail below in conjunction with FIG. 2 to FIG. 8. For ease of understanding, the specific data mentioned in the following description are exemplary and are not used for defining the scope of protection of the present disclosure. It should be understood that the examples described below may also comprise additional actions not shown and/or actions that may be omitted as shown, the scope of the present disclosure being not limited in this regard.

FIG. 2 shows a flow chart of a method 200 for updating lane lines on a map in some examples of the present disclosure. In some examples, in the example environment 100 shown in FIG. 1, the method 200 may be performed by the controller 108. It should be understood that although the following content is described with the controller 108 as the execution subject, the method 200 may also be executed by other devices. The method 200 may further comprise additional actions not shown and/or actions that may be omitted as shown, the scope of the present disclosure being not limited in this regard.

At 202, a first set of sampling points of lane lines is acquired from a map. In some examples, the controller 108 acquires a map 110 corresponding to the environment in which the vehicle 106 is located. The map 110 may be acquired from a storage unit of the vehicle 106 or from a remote device via a communication link. The controller 108 acquires the map points 112 (which may be referred to as a first set of sampling points) of lane lines (e.g., lane line 104-2 and lane line 104-3) from the map 110. It will be understood that the present disclosure does not limit the type of map 110. The map can be two-dimensional or three-dimensional, and it can be drawn electronically or based on real-world images.

At 204, a second set of sampling points of lane lines in the driving scenario is acquired based on vehicle sensor information. In some examples, sensors (e.g., cameras, radar) of the vehicle 106 may collect sensor information about the vehicle's current driving environment. The sensor information comprises descriptive data about lane lines. The controller 108 may analyze the sensor information to obtain detection points 116 (which may be referred to as a second set of sampling points) of lane lines (e.g., lane line 104-2 and lane line 104-3). It will be understood that the present disclosure does not limit the order of steps 202 and 204.

At 206, the first set of sampling points on the map is updated based on the positional relationship between the first set of sampling points and the second set of sampling points. In some examples, after sampling the map points 112 and the detection points 116, the controller 108 updates the map points 112 based on the positional relationship between the map points 112 and the detection points 116, thereby fusing the information in the detection points 116 into the map points 112 and thus forming fusion points 118. In this way, the controller 108 may correct the lanes on the map 110 based on the fusion points 118 to obtain lane lines on the map 110 that incorporate real driving scenario information.

In examples of the present disclosure, existing maps and current sensor information can be fused to update the position of map points based on lane line detection points in real driving scenarios. Moreover, global lane lines can be formed based on the map's topology, thereby avoiding the limitations of sensor detection range and enabling the updating and expansion of perception results. As such, examples of the present disclosure are capable of increasing the accuracy of lane line updates on the map.

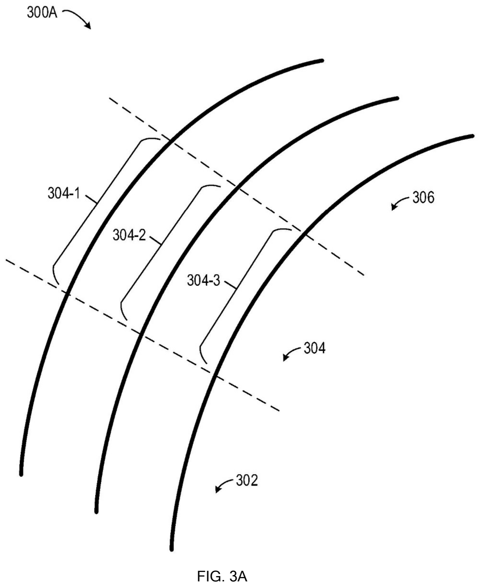

FIG. 3A shows a schematic diagram of a road 300A based on region division on a map in some examples of the present disclosure. In some examples, the elements in the map 110 may be divided into roads, regions, lanes, and lane lines according to their levels. In the process of constructing the map 110, the map 110 may be constructed with data collected by high-precision map data collection vehicles (or data collection fleets).

With reference to FIG. 3A, road 300A is divided into regions 302, 304, and 306 according to certain dimensions (which may be referred to as granularity of region division). Each region contains corresponding lanes and lane lines, wherein the lane lines located in region 304 comprise lane line 304-1, lane line 304-2, and lane line 304-3. In some examples, the controller 108 may acquire a sub-map of the region in which the vehicle 106 is located, such as a sub-map corresponding to the region 304, according to the region division of the map 110 and determine lane line 304-1, lane line 304-2, and lane line 304-3 (which may be referred to as the first lane line) on the sub-map.

The controller 108 may then sample map points in lane line 304-1, lane line 304-2, and lane line 304-3 according to a pre-set sampling rule (which may be referred to as a first sampling strategy). In some examples, the controller 108 may sample map points in a uniform sampling manner. In this way, the controller 108 is able to combine the sub-map corresponding to the current region where the vehicle 106 is traveling with the sensor information of the current region to update the map points on the sub-map, that is, to update the map points of the lane lines in region 302, region 304, and region 306 in sequence, avoiding the need to directly update the map points on the entire road 300A. This can reduce the computing cost of the controller 108 without affecting navigation, thereby improving the efficiency of lane line updating.

In some examples, the controller 108 may determine the lane line (which may be referred to as a second lane line) in the actual driving scenario from the sensor information 114 and sample the lane line according to a pre-set sampling strategy or rule to obtain the detection points of the lane line. In some examples, to ensure the matching of map points and detection points, the sampling strategies or rules for map points and detections points can be the same or correspond to each other. For example, the sampling intervals for both can be the same.

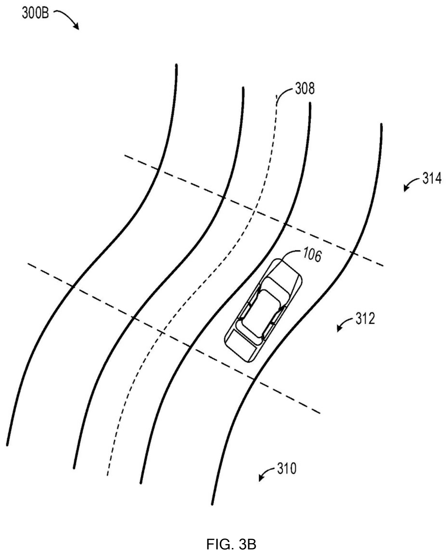

FIG. 3B shows a schematic diagram of a road 300B based on region division on a map in some examples of the present disclosure. In some examples, the elements in the map may be divided into roads, regions, lanes, lane lines, etc. according to their levels. In some examples, the controller 108 may divide the road into a plurality of regions according to a certain region size (which may be referred to as a preset granularity), including region 310, region 312, region 314, etc., where each region has corresponding lanes and lane lines.

In some examples, the controller 108 may deduce the attributes of map points on the lane line from the attributes of reference points on a determined reference line 308 and the corresponding transformation relationships during the driving of the vehicle 106. Therefore, map points can be updated by updating the reference points and the parameters in the transformation relationship. It will be understood that in the process of actually updating the map, since the user needs only the map associated with the current driving scenario, the controller 108 does not need to directly update the entire lane line, but instead can dynamically update the map associated with the current driving scenario as the vehicle 106 travels. The process of the controller 108 dynamically updating the map will be described below in conjunction with FIG. 3B.

In some examples, the controller 108 may determine the region 312 (which may be referred to as a first region) in which the vehicle 106 is currently traveling and determine the attributes of a plurality of reference points on a reference line in the region 312. The controller 108 then updates the attributes of the map points on the lane line within the region 312 based on the attributes and transformation relationships of the reference points within the region 312. Here, the attributes of the map points within the lane lines are expressed using the attributes of reference points and transformation relationships. For example, the attribute of map point T1 is expressed as follows:

$$T1 = M * T2 \qquad\qquad (1)$$

In this way, the lane line in a portion of the map can be updated based on the current driving scenario of the vehicle 106 without having to update the entire lane line directly, thus improving the efficiency of lane line updates.

In some examples, the controller 108 may determine the attributes of map points of lane lines on the map and determine the detection points of real lane lines in the driving scenario (which may be referred to as a second set of sampling points) through detectors such as cameras and radar. The controller 108 then updates the attributes of the map points of the lane lines according to the positional relationship between the map points and the detection points; that is, it updates the attributes of the corresponding reference points and the expression of the transformation relationship.

It will be understood that due to the large amount of noise in the data determined by detectors and the limitations of the detection range and the detection environment, the data detected by detectors often lacks geometric information and topological logic. However, data detected in real time is specific to the current road. At the same time, due to the freshness problem of pre-built maps, there are often local or overall errors over time or changes in actual roads, and their accuracy will continue to decrease, but the maps often contain complete geometric information and topological logic. In this way, the ability to fuse the detected data as well as the pre-built map enables the updated map to have both real-time detection and structural constraints, thereby improving the accuracy of the map.

However, since the controller 108 in the present disclosure may update the map point attributes not directly based on the positional relationship between the map points and the detection points of the lane line, but can instead use the attributes and transformation relationships of the reference points in the reference line 308 to replace the map points, the amount of data is reduced. Accordingly, in some examples, the controller 108 may determine the expression of the map points of the lane line (e.g., equation (1)) based on the attributes and transformation relationships of the reference points in the reference line 308 and determine the attributes of the detection points of the real lane line in the driving scenario through detectors such as cameras and radar. The controller 108 then updates the parameters in the expression of the map points, i.e., updates the parameters related to the transformation relationship in the expression, such as rotation parameters and translation parameters, based on the positional relationship between the map points and the detection points. In this way, map points can be updated by updating the parameters of the transformation relationship, thereby improving the accuracy of lane lines. Additionally, since the amount of data involved in the update process is reduced, the efficiency of map updates can be improved.

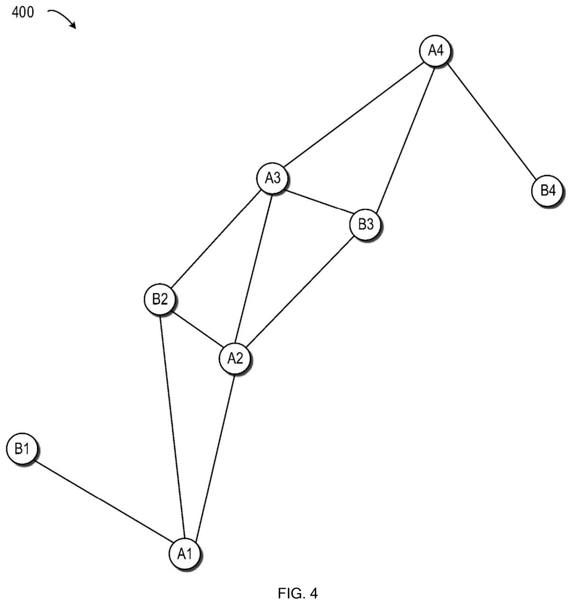

In some examples, the controller 108 may define the problem of adjusting map points 112 (which may be referred to as the first set of sampling points) based on detection points 116 (which may be referred to as the second set of sampling points) as a graph optimization problem in an optimization problem, that is, define it as argmin (E). Here, E represents the graph-related constraints, which can be a cost function related to the positions of detection points 116 and map points 112. How to establish constraints in graph optimization will be described below in conjunction with FIG. 4. The argmin function is used to represent the value of the independent variable when constraint E reaches its minimum value.

With respect to the graph optimization problem in this example, optimization methods such as the Gauss-Newton method and stochastic gradient descent can be used in the optimization to calculate the optimal set of map points 112, i.e., to obtain the attributes of the set of map points 112 that minimizes constraint E. The Gauss-Newton method is a nonlinear least squares optimization method, which is usually used to solve nonlinear least squares problems. The Gauss-Newton method can be used to calculate the optimal set of attributes of map points 112. Stochastic gradient descent is an optimization algorithm used to minimize functions with derivatives. In the iterative process of stochastic gradient descent, the function is gradually minimized by calculating the gradient of the function and updating the parameters in the opposite direction.

With respect to constraint E, it may be a cost function with the attributes of the map points 112 as independent variables. In some examples, in the process of constructing the graph, map points 112 can be described based on the Special Euclidean Group in 2D, SE(2), thereby establishing nodes in the graph. Here, the Special Euclidean Group based on two-dimensional space is used to describe the rigid body motion of map point 110 on the two-dimensional plane, including translational motion and rotational motion. It will be understood that although the following examples use a Special Euclidean Group in two-dimensional space to construct nodes, other methods of constructing nodes, such as using a Special Euclidean Group in 3D (SE(3)), are also within the scope of the present disclosure. In some examples, rotational motion is identified by angle θ (which may be referred to as a rotation parameter) and translational motion is identified by coordinates (x, y) (which may be referred to as a translation parameter). The node expression in the constructed graph can be obtained as follows:

$$\begin{bmatrix} \cos\theta & -\sin\theta & x \\ \sin\theta & \cos\theta & y \\ 0 & 0 & 1 \end{bmatrix} \qquad (2)$$

In some examples, the controller 108 may describe the attributes of reference points on a reference line and the attributes of map points on a lane line based on a Special Euclidean Group in 2D (SE(2)).

In some examples, the transformation relationship between the reference points of the reference line and the map points of the lane line comprises a rotation relationship and a translation relationship. After determining a plurality of reference points in the reference line and a plurality of map points in the lane line, the controller 108 can determine the attributes of the plurality of reference points and the attributes of the plurality of map points based on a Special Euclidean Group in two-dimensional or three-dimensional space. The controller 108 then establishes the transformation relationship between the reference points and the map points based on the attributes of the reference points and the map points. For example, with T1 as a map point on the lane line and T2 as a reference point on the reference line, the transformation relationship matrix M can be obtained, expressed as follows:

$$M = T_1 * T_2^{-1} \qquad (3)$$

where the transformation relationship matrix M may comprise parameters related to rotation and parameters related to translation.

That is, the lane line Pboundary on a road can be represented by the reference line Preference and the directional and distance relationships (i.e., rotation and translation relationships) between the reference line Preference and the lane line Pboundary, as follows:

$$P_{boundary} = \begin{bmatrix} R & T \\ 0 & 1 \end{bmatrix} P_{reference} \qquad (4)$$

where R is the directional relationship and T is the distance relationship. In this way, the transformation relationship between the reference points of the reference line and the map points of the lane line can be quickly established, thereby improving the update efficiency of the map points of the lane line.

In some examples, the reference line may be set to the center line of the road in view of the application of Frenet coordinates in the field of autonomous driving. In the Frenet coordinate system, the center line of the road is used as the reference, the distance the vehicle travels along the center line is used as the s-axis coordinate, and the distance the vehicle deviates from the center line is used as the d-axis coordinate. Once the reference line is determined, elements on the road, such as boundary lines and lane lines, can be represented by the reference line without needing to store the attributes of these elements themselves. For example, a map point in a lane line can be determined using the curve of the reference line and its s-axis and d-axis coordinates. In some examples, because the controller 108 does not directly update the attributes of the map points of the lane lines, but instead represents the attributes of the map points as an expression of reference points and corresponding transformation relationships, the nodes in the graph are not represented by the attributes of the map points, but by the reference points in the reference lines and corresponding transformation relationships to represent the independent variables of the cost function. Specifically, the nodes in the graph may be represented as follows (5):

$$\begin{bmatrix} x \\ y \\ \theta \\ M_1 \\ M_2 \\ M_3 \\ ... \end{bmatrix} \qquad\qquad (5)$$

where x, y are the translation coordinates of the reference point, $\theta$ is the direction angle of the reference point, and M1, M2, and M3 are the transformation relationship matrices between the reference point and the map point. It will be understood that there may be one or more transformation relationships between reference points and map points.

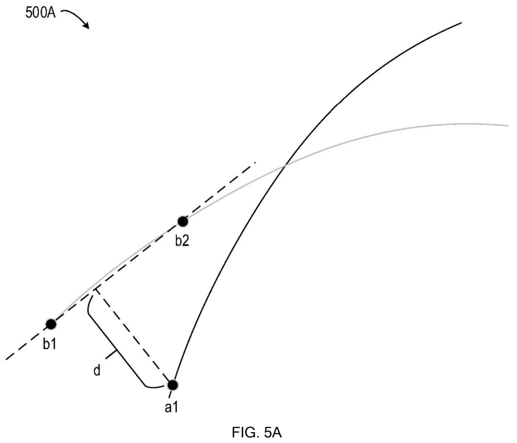

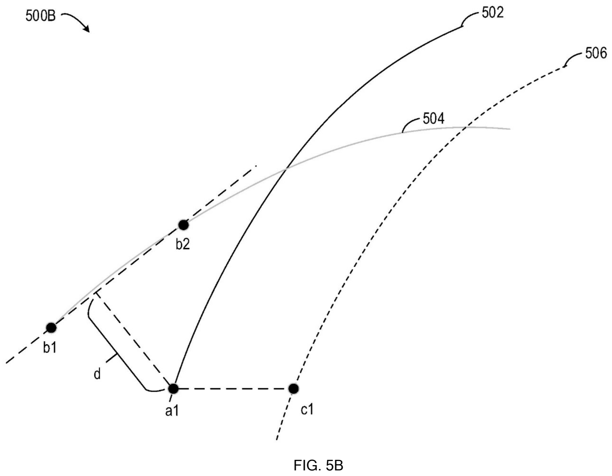

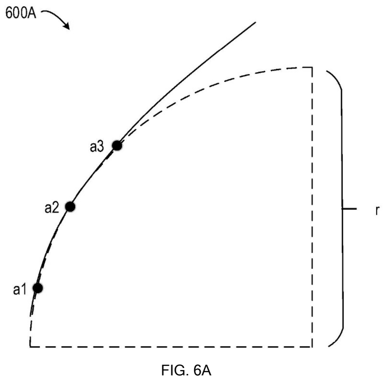

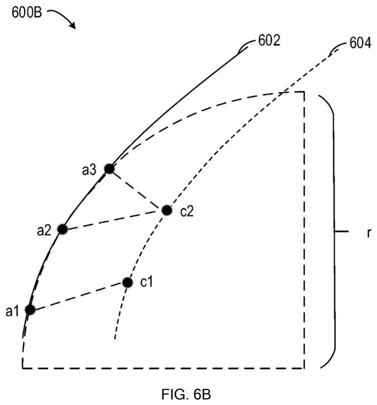

Upon determining the independent variables in constraint E, the controller 108 may further establish constraint E. The constraint E may be established according to the positions of the detection points 116 and the map points 112 as described above. In some examples, the controller 108 may determine the positional relationship between a map point and two adjacent detections points, such as the projection distance of the map point to the line connecting the two adjacent detections points, in order to determine constraint E1 (which may be referred to as a first constraint) in graph optimization. The process of establishing constraint E1 will be described in detail below in conjunction with FIG. 5A and FIG. 5B. In some examples, the controller 108 may construct constraint E2 (which may be referred to as a second constraint) in graph optimization based on the positional relationship between map points 112. For example, the controller 108 may determine constraint E2.1 in graph optimization based on a transformation relationship between map points 112, such as a transformation relationship between two map points. The controller 108 may also determine constraint E2.2 in graph optimization based on the curvature relationship between map points 112, such as the radius of the osculating circle determined by three map points. The process of establishing constraint E2.2 will be described in detail below in conjunction with FIG. 6A and FIG. 6B. Further, the controller 108 may determine the total constraint E=E1+E2=E1+E2.1+E2.2. It will be understood that the constraints E1, E2.1, and E2.2 as set forth above are all examples, and that the constraint E in the present disclosure may further comprise constraints determined in other ways. Upon determining constraint E, the controller 108 may calculate the attributes of the optimal set of map points 112 according to optimization methods such as the Gauss-Newton method and stochastic gradient descent.

With respect to constraints determined in a manner other than the above constraints, in some examples, the controller 108 is able to generate the lane lines of the map in a dynamically updated manner during the driving of the vehicle 106 (see FIG. 3B and the corresponding example for the specific process). To ensure the continuity of the same lane line in different regions during dynamic updates, the controller 108 may determine the first map point of the lane line in region 312 (which may be referred to as a first region) and the last map point of the lane line in region 310 (which may be referred to as a second region). The controller 108 may then construct constraint E2.3 between the nodes corresponding to the first and last map points based on the positional relationship between the two map points (this constraint is also one of the second constraints). Further, the controller 108 may determine the total constraint

$$E=E1+E2=E1+E2.1+E2.2+E2.3.$$

FIG. 4 shows a schematic diagram of the relationship 400 between map points and detection points in some examples of the present disclosure. It will be understood that the relationship 400 is used solely to explain the map update process and that the disclosed structure does not create limitations on the present disclosure. In some examples, the controller 108 may first determine a corresponding detection point 116 according to the map point 112, such as by using a binary tree to determine the detection point 116 corresponding to the map point 112. It will be understood that if a map point and a detection point represent the same or similar locations on an actual road, then optimizing the distance between the map point and the detection point is of practical significance. Therefore, before performing graph optimization, it is necessary to ensure that the map points and the corresponding detection points represent the same or similar actual locations. In some examples, map points and detection points having a corresponding relationship may be associated in the form of a binary tree. The controller 108 may create a graph for updating map points 112 according to the relationship 400 between the map points 112 and the detection points 116. In the relationship 400, the map points 112 may comprise map points A1-A4 and the detection points 116 may comprise detection points B1-B4.

The controller 108 may then determine a constraint (which may be referred to as a first constraint) of the nodes in the graph used to update the map points 112 based on the positional relationship between the map points 112 and the detection points 116. The constraints of the map points 112 on the nodes in the graph are reflected in the positional relationship between the map points 112 and the detection points 116 in the relationship 400. For example, based on the positional relationship between map point A1 and detection point B1 or the positional relationship between map point A3 and detection point B2, constraints on the nodes of map point A1 and the nodes of map point A3 can be constructed. Further, the controller 108 may iteratively optimize the graph by constraints, thereby updating the attributes of the nodes in the graph until the constraint can meet the convergence condition, such as the constraint reaching a preset minimum value.

In some examples, the controller 108 may construct a constraint (which may be referred to as a first constraint) between the nodes in the graph based on the positional relationship between the map points 112 of the lane lines in the map and the detection points 116 in the real scenario. It will be understood that constraints between nodes can be represented as edges between nodes. Further, the controller 108 may perform graph optimization iteratively through constraints, thereby updating the parameters in the node expression (such as the parameters in M1, M2, and M3 above) until the constraint can satisfy a convergence condition, such as the constraint reaching a preset minimum value.

It will be understood that when the constraints of the nodes in the figures satisfy the convergence condition, the resulting attributes of the nodes are the parameters of the updated map points, i.e., the fusion points 118. The controller 108 may then update the lane lines on the map 110 based on the fusion points 118. In this way, the controller 108 is able to update the map points 112 in a graph-optimized manner, thereby clearly expressing the dependencies of the map points 112 and improving the efficiency and accuracy of lane line updates. In some examples, the controller 108 may determine the detection point (second sampling point) adjacent to the selected map point (first sampling point) in the detection points 116, such as the two detection points closest to the selected map point. The controller 108 then establishes constraints on the nodes in the graph based on the positional relationship between the selected map point and the detection points adjacent to the selected map point. For example, the two detection points adjacent to map point A1 are detection point B1 and detection point B2. At this time, the constraints of the nodes corresponding to map point A1 can be constructed by the positional relationship between map point A1, detection point B1, and detection point B2.

It will be understood that for map point A1 and detection point B1 and detection point B2, the closer their positions are, the smaller the constraint of the node corresponding to map point A1 is and the more accurate map point A1 is. Therefore, by iteratively optimizing the graph to update the node attributes until the constraints can meet the convergence condition, such as reaching a pre-set minimum value, the nodes can be iteratively updated, and then the updated map points can be acquired after the constraints converge. This method improves the accuracy of constraints, thereby enhancing the accuracy of lane line updates.

FIG. 5A shows a schematic diagram of a process 500A for calculating distances based on map points and detection points in some examples of the present disclosure. The relationship of map point a1 with detection point b1 and detection point b2 is shown in FIG. 5A. In some examples, the controller 108 may first determine detection point b1 and detection point b2 (detection point b1 and detection point b2 may be referred to as at least two second sampling points) adjacent to map point a1 in the detection points 116, and then determine the connecting line b1b2 (which may be referred to as a reference line) based on detection point b1 and detection point b2. Further, the controller 108 determines the projected distance from map point a1 to the connecting line b1b2 and determines a constraint (which may be called a first constraint) of the nodes in the graph based on the projected distance.

In some examples, the graph-wide constraint E1 can be constructed based on the sum of the distances between each map point and its two adjacent detection points. The calculation of constraint E1 is shown in equation (6):

$$E_1 = \sum_j^{n_F} \sum_i^{n_V} \left\| D_{PL}\left(V_i^O, \mathbb{L}_j^O\right)\right\|_{\Sigma_1} \qquad (6)$$

where $V_i^0$ is the map point, $\mathbb{L}_j^O$ is two detection points adjacent to the map point, $D_{PL}$ is the projected distance between $V_iO$ and $\mathbb{L}_j^O$, and $n_F$ and $n_V$ are the number of detection points and map points, respectively.

FIG. 5B shows a schematic diagram of a process 500B for calculating distances based on map points and detection points in some examples of the present disclosure. In some examples, the controller 108 may determine, among a plurality of detection points, the detection points adjacent to the selected map point, such as the two detection points closest to the selected map point. The controller 108 then establishes a constraint (which may be referred to as a first constraint) between nodes in the graph based on the positional relationship between the selected map points and the adjacent detection points. For example, with reference to FIG. 5B, the map point on lane line 502 in the map is a1, and the two detection points adjacent to map point a1 are detection point b1 and detection point b2 on detection line 504 (i.e., the detected lane line). At this time, the controller 108 can construct the positional relationship between map point a1, detection point b1, and detection point b2, i.e., the constraints between nodes in the graph can be constructed. The specific process is similar to process 500A above and will not be repeated here.

With respect to map point a1 in lane line 502, it may be expressed by reference point c1 in reference line 506 and the transformation relationship between map point a1 and reference point c1 (which may be referred to as a first transformation relationship). At this time, the attributes of map point a1 may be expressed as the attributes of reference point c1 and the transformation relationship. In this way, by simply substituting the expression of map point a1 into $V^0$ in the above equation (6), the constraint E1 expressed by the attributes of reference point cl and the transformation relationship can be obtained.

In some examples, in the process of updating the nodes in the graph, the positional relationship between map points 112 may be further combined to construct a constraint E2 (which may be referred to as a second constraint) for the nodes in the graph to update the position of the map points 112. In particular, the controller 108 may determine the constraints between the nodes corresponding to map points 112 based on the positional relationship between map points 112. The nodes in the graph are then iteratively updated according to constraint E2 and constraint E1 (i.e., the first constraint) determined based on the positional relationship of map points 112 and detection points 116 until the above constraints converge. In this way, the positional relationships between map points 112 can be combined to further construct constraints, thereby improving the accuracy of the graph and thus improving the accuracy of updating map points 112.

In some examples, the controller 108 may determine the transformation relationship between map points 110, such as the translation transformation relationship and the rotation transformation relationship, based on the positional relationship between map points 110

. The controller 108 then determines the constraints between the nodes corresponding to map points 110 based on the transformation relationship between map points 110. In some examples, the constraint E2.1 between nodes is calculated as shown in equation (7):

$$E_{2.1} = \sum_i^{n_V} \left\| Log \left( M_{i+1}^O {}^{-1} \cdot M_i^O \cdot V_i^{O-1} \cdot V_{i+1}^O \right) \right\|_{\Sigma_2} \quad (7)$$

where $M_iO_i^O$ and $M_iO+1$ are the transformation matrices of node $V_iO+1$ and node $V_i^O$, respectively. Both node $V_iO+1$ and $V_i^O$ can be expressed through their corresponding reference points and the transformation relationship between the reference points and map points.

FIG. 6A shows a schematic diagram of a process 600A for calculating curvature based on map points in some examples of the present disclosure. In some examples, the controller 108 may also determine the constraints between map points 112 based on the curvature relationship between map points 112 in the process of constructing constraints between nodes in the graph. With reference to FIG. 6A, the controller 108 may determine the curvature of the osculating circle formed by map point a1, map point a2, and map point a3 (which may be referred to as at least three first sampling points) based on the positional relationship between them. With this curvature, the control 108 may determine a constraint (which may be referred to as a second constraint) between the corresponding three nodes in the graph. In this way, the controller 108 is able to construct the constraints of the graph based on the curvature between map points 112, thereby ensuring accuracy and smoothness between the updated map points 112.

In some examples, the controller 108 may calculate the curvature of the osculating circle formed by map point a1, map point a2, and map point a3 based on equation (8) to obtain the constraint E2.2 between the corresponding nodes:

$$E_{2.2} = \sum_i^{n_V} \left\| \frac{\theta_i - \theta_{i+1}}{\|p_i - p_{i+1}\|_2} - \frac{\theta_{M,i} - \theta_{M,i+1}}{\|p_{M,i} - p_{M,i+1}\|_2} \right\|_{\Sigma_3} \quad (8)$$

Where $\theta_i$ and $\theta_{i+1}$ are the angle measurements of the i-th and i+1-th nodes, respectively, $\theta_{M,i}$ and $\theta_{M,i+1}$ are the angle measurements of the i-th and i+1-th nodes after transformation matrix M, respectively, and $\|p_i-p_{i+1}\|$ and $\|p_{M,i}-p_{M,i+1}\|$ represent the distance measurements between the corresponding points.

FIG. 6B shows a schematic diagram of a process 600B for calculating curvature based on map points in some examples of the present disclosure. In some examples, map point a1, map point a2, and map point a3 in lane line 602 may be expressed, e.g., by reference point c1 and reference point c2 on reference line 604 and transformation relationships. In this way, constraint E2.2 expressed by reference point c1 and reference point c2 and their corresponding transformation relationships can be obtained.

In some examples, upon determining the above constraints E1, E2.1, and E2.2, the total constraint E of the graph may be constructed based on the sum of the constraints, i.e., E=E1+E2.1+E2.2. The controller 108 then updates the properties of the nodes according to the total constraint E, causing constraint E to converge. In some examples, the controller 108 updates the parameters in the expression of the map points 112 on the map according to the total constraint E, causing constraint E to converge. In this way, the controller 108 can update the positions of the map points 112 based on constraints in multiple dimensions, thereby improving the accuracy of the fusion points 118 and the accuracy of lane line updates.

In some examples, the controller 108 is able to generate the lane lines of the map in a dynamically updated manner during the driving of the vehicle 106 (see FIG. 3B and the corresponding example for the specific process). To ensure the continuity of the same lane line in different regions during dynamic updates, the controller 108 may determine the first map point of the lane line in region 312 (which may be referred to as a first region) and the last map point of the lane line in region 310 (which may be referred to as a second region). The controller 108 may then construct constraint E2.3 between the nodes corresponding to the first and last map points based on the positional relationship between the two map points.

It will be understood that, in order to ensure a smooth connection of lane lines in different regions, the controller 108 may set the first and last map points above to the same map point, i.e., a distance of 0 between the two. In this way, it may be ensured that the lane lines in region 302 may be connected end to end with the lane lines in region 304. Thus, the closer the value of constraint E4 is to 0, the smoother the lane lines in the different regions will be.

In some examples, upon determining the above constraints E1, E2.1, E2.2, and E2.3, the total constraint E of the graph may be constructed based on the sum of the above constraints, i.e., E=E1+E2.1+E2.2+E2.3. The controller 108 then updates the parameters in the expression of map points in the map according to the total constraint E, thereby making constraint E converge. In this way, the controller 108 can update the positions of the map points on the map based on constraints in multiple dimensions, thereby improving the accuracy of the map points and the accuracy of lane line updates.

In some examples, when the map points of lane lines in the map have the same or similar attributes, their corresponding transformation relationship matrices are also the same or similar, that is, different map points may have the same or similar translation transformation relationships or rotation transformation relationships. Thus, for a set of map points with the same or similar transformation relationship matrices, the controller 108 may record the same or similar set of map points through a unified transformation relationship matrix (which may be referred to as a target transformation matrix). In this way, the controller 108 can represent multiple identical or similar transformation relationship matrices through a unified transformation relationship matrix, and thus express a set of identical or similar map points, avoiding repeated calculations of parameters in identical or similar transformation relationship matrices and thereby improving the efficiency of map updates.

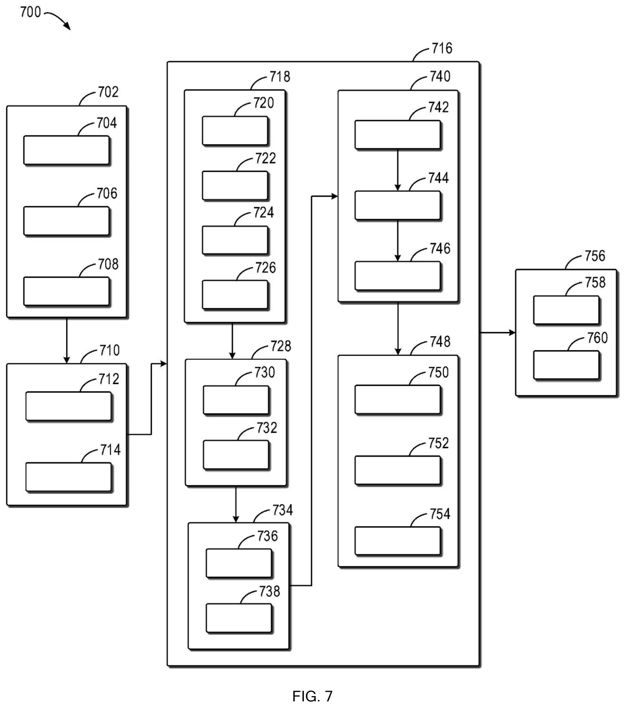

In some examples, the controller 108 may represent map points based on the same or similar transformation relationship matrices and update the parameters in the transformation relationship matrix according to the positional relationship between the map points and the detection points, thereby achieving unified updating of the parameters in the same or similar transformation relationship matrices. This method improves the efficiency of updating parameters in the expression of map points, thereby improving the efficiency of updating lane lines on a map. FIG. 7 shows a schematic diagram of a process 700 for updating lane lines on a map in some examples of the present disclosure. In some examples, in the example environment 100 shown in FIG. 1, the process 700 may be performed by the controller 108. It should be understood that although the following content is described with the controller 108 as the execution subject, the process 700 may also be performed by other devices.

The method 700 may further comprise additional actions not shown and/or actions that may be omitted as shown, the scope of the present disclosure being not limited in this regard.

In some examples, the controller 108 prepares system input information 702 in advance, comprising map information 704 (which may be, for example, a high-definition map or a standard map), global/local positioning 706, and camera perception information 708. Additionally, the controller 108 is further provided with a packaging program 710, comprising an offline data converter 712 and a timestamp synchronizer 714. The controller 108 processes the system input information 702 through the offline data converter 712 and the timestamp synchronizer 714 and inputs it into a lane line fusion model 716 after processing.

In some examples, the lane line fusion model 716 comprises a sampler 718 for sampling lane lines at 720, where the controller 108 samples lane lines. In some examples, the controller 108 acquires lane lines of the map in the current driving scenario from the map information 704 according to global/local positioning 706 and acquires perceived lane lines from camera perception information 708. The lane lines in the map information 704 are generally based on rule settings, while the lane lines in the perception information 708 are generally lane lines in the actual driving scenario.

At 722, the controller 108 resamples the lane lines. In some examples, the controller 108 samples points (i.e., a first set of sampling points and a second set of sampling points) from the lane lines collected from the map information 704 and the lane lines collected from the camera perception information 708. It should be understood that the lane lines obtained by the above two methods are not the same. Since lane lines on a map are always defined by key points and line segments, only two key points and one line segment are needed to define a straight lane, while multiple key points and multiple line segments are needed for a curved lane. Conversely, the lane lines in a perceived image have uniform points, which differ significantly from the points on the map. Thus, in order to ensure that the sampling points obtained from the map information 704 are aligned with the sampling points obtained from the camera perception information 708, the controller 108 may resample the lane lines in the map information 704 and the camera perception information 708 according to a certain sampling strategy or sampling rule.

At 724, the controller 108 constructs a graph. In some examples, the controller 108 constructs a graph according to the relationships between the resampled points. At 726, the controller 108 determines the current region. In some examples, the controller 108 extracts a sub-map of the current map region according to the map division rules. In this way, the controller 108 can perform graph optimization based solely on the locations within the region.

The controller 108 further comprises a lane line matcher 728. At 730, the controller 108 performs matching at the lane line level. It will be understood that lane line fusion under multimodal conditions is highly challenging because the perceived lane lines and the lane lines on the map cannot be automatically aligned, making it difficult for fusion models to fuse lane lines from different modalities. To this end, in some examples, the controller 108 determines to extract a lane line (which may be referred to as a first lane line set) from the lane line set corresponding to the map information 704 and to extract another lane line (which may be referred to as a second lane line set) from the lane line set corresponding to the camera perception information 708. The controller 108 then judges whether the extracted two lane lines represent the same actual lane line in the road. If the two extracted lane lines both represent the same actual lane line, then the two lane lines are determined to be a match. For example, the controller 108 may determine the deviation distance between two lane lines and determine the degree of matching between the two lane lines based on the deviation distance. Further, if the two lane lines match, the controller 108 may extract map points and detection points from the two matching lane lines, thus ensuring that the extracted map points and detection points represent the same actual lane line. If the two lane lines do not match, it indicates that the two lane lines do not represent the same actual lane line. In this case, the two lane lines can be filtered out. In this way, the correctness of lane lines can be determined based on the matching degree of lane lines under different modalities, thereby improving the accuracy of lane lines and reducing the difficulty of lane line fusion.

At 732, the controller 108 performs association of sampling points. In some examples, the controller may select a region of interest on the map and obtain the lane lines on the map and the perceived lane lines in the region of interest. Then, based on the above method, it determines whether the lane lines under the two modalities match and filters out the mismatched lane lines.

A binary tree (e.g., a K-dimensional tree) is then used to establish the association between the sampling points of lane lines under different modalities. In this way, the detection point corresponding to a map point can be determined through the binary tree, and then the map point update solution in the present disclosure can be implemented. In some examples, the controller 108 is further provided with a lane line fusion manager 734. The lane line fusion manager 734 is provided with a sliding window 736 and a detection interface 738. In some examples, the sliding window 736 is used to extract the region at which the vehicle 106 is presently located from the map information 704, wherein the size of the sliding window 736 may be set according to actual needs. The detection interface 738 is used to read camera perception information 708 from a camera.

In some examples, the controller 740 further comprises a graph optimizer 740. At 742, the controller 108 constructs nodes in the graph. In some examples, the controller 108 constructs nodes in the graph based on the resampled points in the lane lines of the different modalities described above. The method of constructing nodes has been described in detail in the above examples. At 744, the controller 108 constructs the constraints of the graph. In some examples, the controller 108 constructs, for example, the various constraints described above based on the positional relationship between sampling points. At 746, the controller 108 optimizes the constraints using a least-squares approach.

In some examples, the controller 108 further comprises a post-processor 748 for processing optimized items. For example, at 750, the controller 108 adjusts the program interface. At 752, the controller 108 initializes the raw map information. At 754, the controller 108 re-generates the map information. In some examples, in order to update the lane lines on the map, the computing power of the controller 108 needs to be weighed. Updating the lane lines across the entire map places higher demands on the computing of the controller 108. Accordingly, the controller 108 may update lane lines in a portion of the map and smooth out other un-updated portions of the map to connect them with the lane lines in the updated portion of the map. In some examples, the controller 108 outputs a system result 756. The system result 756 comprises fused lane lines 758 and a system state 760. In some examples, the system state 760 may comprise lane line update success, lane line update failure, or an unexpected interruption event encountered during lane line update.

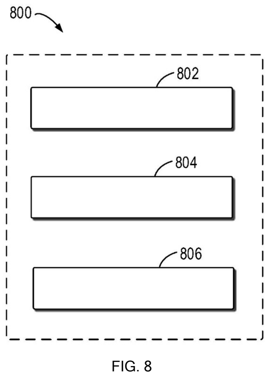

FIG. 8 shows a block diagram of an apparatus 800 for updating lane lines on a map in some examples of the present disclosure. With reference to FIG. 8, the apparatus 800 comprises an acquisition module for a first set of sampling points 802 configured to acquire a first set of sampling points of lane lines from a map. The apparatus 800 further comprises an acquisition module for a second set of sampling points 804 configured to acquire a second set of sampling points of lane lines in a driving scenario based on vehicle sensor information. In addition, the apparatus 800 further comprises a module for updating a first set of sampling points 806 configured to update the first set of sampling points on the map based on the positional relationship between the first set of sampling points and the second set of sampling points.

In some examples, the module for updating a first set of sampling points 806 is further configured to: establish a graph based on the first set of sampling points and the second set of sampling points, wherein the first set of sampling points corresponds to a set of nodes in the graph; determine a first constraint between the set of nodes based on the positional relationship between the first set of sampling points and the second set of sampling points; and iteratively perform graph optimization based on the first constraint to update the attributes of the set of nodes until the first constraint converges.

In some examples, the module for updating a first set of sampling points 806 is further configured to: determine a second sampling point in the second set of sampling points that satisfies the adjacent condition of the first sampling point in the first set of sampling points; and determine a first constraint of a set of nodes based on the positional relationship between the first sampling point and the second sampling point.

In some examples, the module for updating a first set of sampling points 806 is further configured to: determine a reference line based on at least two second sampling points that satisfy the adjacent condition; determine the projection distance from the first sampling point to the reference line; and determine a first constraint of a set of nodes based on the projection distance.

In some examples, the apparatus 800 further comprises a second constraint determination module configured to: determine a second constraint between a set of nodes based on the positional relationship between the first set of sampling points; and the module for updating a first set of sampling points 806 is further configured to: iteratively perform graph optimization based on the first constraint and the second constraint to update the attributes of a set of nodes until the first and second constraints converge.

In some examples, the module for updating a first set of sampling points 806 is further configured to: determine the transformation relationship between the first set of sampling points based on the positional relationship between the first set of sampling points, wherein the transformation relationship comprises at least a translation transformation relationship and a rotation transformation relationship; and determine a second constraint between a set of nodes based on the transformation relationship between the first set of sampling points.

In some examples, the module for updating a first set of sampling points 806 is further configured to: determine the curvature of an osculating circle of at least three first sampling points based on the positional relationship between at least three first sampling points in the first set of sampling points; and determine a second constraint between at least three nodes corresponding to at least three first sampling points based on the curvature.

In some examples, the attributes of a set of nodes comprise a set of translation parameters and rotation parameters for the sampling points.

In some examples, the module for updating a first set of sampling points 806 is further configured to: determine a reference line for a road related to a lane line on a map; establish an expression for the first set of sampling points based on a first transformation relationship between a set of reference points on the reference line and the first set of sampling points on the lane line; and update the parameters in the expression for the first set of sampling points based on the positional relationship between the first set of sampling points and the second set of sampling points, wherein the parameters are related to the first transformation relationship.

In some examples, the module for updating a first set of sampling points 806 is further configured to: establish a graph based a set of attributes of the first set of sampling points and a set of attributes of the second set of sampling points, wherein the first set of sampling points corresponds to a set of nodes in the graph; determine a first constraint between the set of nodes based on the positional relationship between the first set of sampling points and the second set of sampling points; and iteratively perform graph optimization based on the first constraint to update the parameters in the expression of the first set of sampling points until the first constraint converges.

In some examples, the apparatus 800 is further configured to: determine a second constraint between a set of nodes based on the positional relationship between the first set of sampling points; wherein iteratively performing graph optimization based on the first constraint to update the parameters in the expression of the first set of sampling points comprises: iteratively performing graph optimization based on the first and second constraints to update the parameters in the expression of the first set of sampling points until the first constraint and the second constraint converge.

In some examples, the module for updating a first set of sampling points 806 is further configured to: determine the first sampling point in the first region and the last sampling point in the second region, the first region being the region where the vehicle is located and the second region being the previous region the vehicle passed through; and determine a second constraint between the node corresponding to the first sampling point and the node corresponding to the last sampling point based on the positional relationship between the first sampling point and the last sampling point.

In some examples, the first transformation relationship comprises a rotation relationship and/or a translation relationship, and the apparatus 800 is further configured to: determine a set of reference points in a reference line; determine a set of attributes of the set of reference points and a set of attributes of a first set of sampling points; and establish a rotation relationship and/or a translation relationship between the set of reference points and the first set of sampling points based on the set of attributes of the set of reference points and the set of attributes of the first set of sampling points.

In some examples, the parameters of the first transformation relationship comprise parameters in a set of transformation matrices between a set of reference points and a first set of sampling points, and the apparatus 800 is further configured to: determine a plurality of transformation matrices that satisfy a similarity condition in a set of transformation matrices; determine a target transformation matrix based on the plurality of transformation matrices that satisfy the similarity condition; and establish an expression for a plurality of first sampling points based on the target transformation matrix and the corresponding plurality of reference points.

In some examples, the reference line comprises the center line of a road on a map.

In some examples, the acquisition module for a first set of sampling points 802 is further configured to acquire a sub-map of the region where the vehicle is located based on the regional division granularity of the map; determine a first lane line on the sub-map, the first lane line being the description data of the lane line on the sub-map; and acquire a first set of sampling points in the first lane line based on a pre-set first sampling strategy.

In some examples, the apparatus 800 is further configured to: determine a first reference line on a sub-map, the first reference line being the description data of the reference line on the sub-map; and acquire a set of reference points in the first reference line based on a pre-set third sampling strategy, the first sampling strategy corresponding to the third sampling strategy; wherein establishing an expression for the first set of sampling points based on a first transformation relationship between the set of reference points on the reference line and the first set of sampling points on the lane line comprises: establishing an expression of the first set of sampling points based on the first transformation relationship between the set of reference points on the first reference line and the first set of sampling points on the first lane line.

In some examples, the acquisition module for a second set of sampling points 804 is further configured to determine a second lane line in the sensor information, the second lane line being the description data of the lane line in the sensor information; and to acquire a second set of sampling points in the second lane line based on a pre-set second sampling strategy, the first sampling strategy corresponding to the second sampling strategy.

In some examples, wherein the first lane line is acquired from a first set of lane lines associated with a map and the second lane line is obtained from a second set of lane lines associated with sensor information, the apparatus 800 further comprises a matching module configured to determine whether the first lane line and the second lane line are associated with the same actual lane line; and in response to the first lane line and the second lane line being associated with the same actual lane line, to determine that the first lane line and the second lane line are matched, wherein the matched first lane line and the second lane line are used to sample a first set of sampling points and a second set of sampling points, respectively.

In some examples, the apparatus 800 further comprises a lane line filtering module configured to: determine a deviation distance between a first lane line and a second lane line; determine a degree of matching between the first lane line and the second lane line based on the deviation distance; and determine whether to filter the first lane line and/or the second lane line based on the degree of matching.

It will be understood that the apparatus 800 of the present disclosure may achieve at least one of a number of advantages that the method or process described above can achieve. For example, the apparatus 800 samples map points describing lane lines from a map and samples detection points describing lane lines from sensor information obtained from the driving scenario detected by sensors. It then updates the positions of the map points according to the positional relationship between the map points and the detection points, thereby fusing the map points and the detection points to update the lane lines on the map. In this way, existing maps and current sensor information can be fused to update the positions of map points using lane line detection points in real driving scenarios. The updated map points can form global lane lines based on the topological structure of the map information, avoiding the limitations of sensor detection range and realizing the updating and expansion of perception results. As such, examples of the present disclosure are capable of increasing the accuracy of lane line updates.

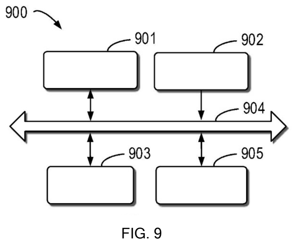

FIG. 9 shows a schematic block diagram of a controller in some examples of the present disclosure. FIG. 9 shows a schematic block diagram of a controller 900 that can be used to implement examples of the present disclosure. In some examples, the controller 900 is used to implement controller 108 shown in the example environment 100 of FIG. 1. As shown in FIG. 9, the controller 900 comprises a processor 901, which can perform various appropriate actions and processes according to machine program instructions stored in a read-only memory (ROM) 902 and loaded into a random-access memory (RAM) 903. Various programs and data required for the operation of the controller 900 may also be stored in the RAM 903. The processor 901, the ROM 902, and the RAM 903 are interconnected through a bus 904. An input/output (I/O) interface 905 is also connected to the bus 904.

The various processes and processing described above, such as the method 200, may be executed by the processor 901. For example, in some examples, the method 200 can be implemented as a machine software program tangibly contained in a machine-readable medium. In some examples, part or all of the machine programs may be loaded and/or installed onto the controller 900 through the ROM 902. When the machine program is loaded onto the RAM 903 and executed by the processor 901, one or more actions of the method 200 described above may be performed.

The present disclosure may be a method, an apparatus, a system, and/or a machine program product. The machine program product may comprise a machine-readable storage medium carrying machine-readable program instructions for performing various aspects of the present disclosure.

The machine-readable storage medium may be a tangible device that maintains and stores instructions used to instruct execution devices. The machine-readable storage medium, for example, may be - but is not limited to - an electrical storage device, magnetic storage device, optical storage device, electromagnetic storage device, semiconductor memory device, or any suitable combination of the above. More specific examples of the machine-readable storage medium (a non-exhaustive list) comprise: random access memory (RAM), read-only memory (ROM), erasable programmable read-only memory (EPROM or flash memory), static random access memory (SRAM), and any suitable combination of the above. The machine-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The machine-readable program instructions described herein may be downloaded from a machine-readable storage medium to various computing/processing devices, or downloaded to external machines or external storage devices from networks, such as the Internet, a local area network, a wide area network, and/or a wireless network. The networks may comprise copper transmission cables, fiber optic transmissions, wireless transmissions, routers, firewalls, switches, gateway machines, and/or edge servers. The network adapter card or network interface in each computing/-processing device receives the machine-readable program instructions from the network and forwards the machine-readable program instructions for storage in a machine-readable storage medium of each computing/processing device.

The machine program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. The machine-readable program instructions may execute entirely on the user's machine, partly on the user's machine, as a stand-alone software package, partly on the user's machine and partly on a remote machine, or entirely on the remote machine or server. Where a remote machine is involved, the remote machine may be connected to the user's machine through any type of network, including a local area network (LAN) or a wide area network (WAN), or may be connected to an external machine (e.g., through the Internet using an Internet service provider). In some examples, the state information of machine-readable program instructions is used to personalize electronic circuits, such as a programmable logic circuit, a field-programmable gate array (FPGA), or a programmable logic array (PLA), wherein the electronic circuit is able to execute machine-readable program instructions, thereby achieving the various aspects of the present disclosure.

Various aspects of the present disclosure are described herein with reference to flow charts and/or block diagrams depicting the method, apparatus (system), and machine program product according to the examples of the present disclosure. It should be understood that every block in the flow charts and/or block diagrams and the combinations of various blocks in the flow charts and/or block diagrams may be implemented by machine-readable program instructions.

These machine-readable program instructions may be provided to a processing unit of a general-purpose machine, a special-purpose machine, or other programmable data processing devices to produce a machine such that when these instructions are executed by the processing unit of the machine or other programmable data processing devices, an apparatus is generated that implements the functions/actions specified in one or more blocks in the flow charts and/or block diagrams. These machine-readable program instructions may also be stored in a machine-readable storage medium, and these instructions cause the machine, programmable data processing devices, and/or other devices to work in a specific manner. Therefore, the machine-readable medium storing the instructions comprises a manufactured product that comprises instructions for implementing various aspects of the functions/actions specified in one or more blocks in the flow charts and/or block diagrams.

The machine-readable program instructions may also be loaded onto a machine, other programmable data processing devices, or other devices, enabling a series of operational steps to be executed on the machine, other programmable data processing devices, or other devices to generate a machine-implemented process. This enables the instructions executed on the machine, other programmable data processing devices, or other devices to implement the functions/actions specified in one or more blocks in the flow charts and/or block diagrams.

The flow charts and block diagrams in the accompanying drawings show the system architecture, functions, and operations that may be implemented based on the system, method, and machine program product according to the plurality of examples of the present disclosure. Regarding this, every block in the flow chart or block diagram can represent a part of a module, program section, or instructions, wherein the part of the module, program section, or instructions contains one or a plurality of executable instructions that are used to implement the stipulated logic function. In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It should also be noted that each block of the block diagrams and/or flow charts, and combinations of blocks in the block diagrams and/or flow charts, can be implemented by special-purpose hardware-based systems that perform the specified functions or actions, or by combinations of special-purpose hardware and machine instructions.

The above description of the various embodiments of the present disclosure is exemplary and not intended to be exhaustive or limited to the disclosed embodiments. Many modifications and variations will be apparent to those of ordinary skill in the art without departing from the scope and spirit of the described embodiments. The terms used herein are chosen to best explain the principles and practical application of the various examples or the technological improvements in the technology in the market, or allow others of ordinary skill in the art to understand the various examples disclosed herein.

**Claims**

1. A method (200) for updating lane lines on a map, comprising:
acquiring a first set of sampling points of lane lines from a map (202); acquiring (204) a second set of sampling points of lane lines in a driving scenario based on vehicle sensor information; and updating (206) the first set of sampling points on the map based on the positional relationship between the first set of sampling points and the second set of sampling points.

2. The method (200) according to Claim 1, wherein updating (206) the first set of sampling points on the map based on the positional relationship between the first set of sampling points and the second set of sampling points comprises:

   establishing a graph based on the first set of sampling points and the second set of sampling points, the first set of sampling points corresponding to a set of nodes of the graph;
   determining a first constraint of the set of nodes based on the positional relationship between the first set of sampling points and the second set of sampling points; and
   iteratively performing graph optimization based on the first constraint to update the attributes of the set of nodes until the first constraint converges.

3. The method (200) according to Claim 2, wherein determining the first constraint of the set of nodes based on the positional relationship between the first set of sampling points and the second set of sampling points comprises:

   determining a second sampling point in the second set of sampling points that satisfies an adjacent condition of a first sampling point in the first set of sampling points; and
   determining the first constraint of the set of nodes based on the positional relationship between the first sampling point and the second sampling point.

4. The method (200) according to Claim 3, wherein determining the first constraint of the set of nodes based on the positional relationship between the first sampling point and the second sampling point comprises:

   determining a reference line based on at least two second sampling points that satisfy the adjacent condition;
   determining a projection distance from the first sampling point to the reference line; and
   determining the first constraint of the set of nodes based on the projection distance.

5. The method (200) according to Claim 2, further comprising:

   determining a second constraint between the set of nodes based on the positional relationship between the first set of sampling points;
   wherein iteratively performing graph optimization based on the first constraint to update the attributes of the set of nodes comprises: iteratively performing graph optimization based on the first constraint and the second constraint to update the attributes of the set of nodes until the first constraint and the second constraint converge.

6. The method (200) according to Claim 5, wherein determining the second constraint between the set of nodes based on the positional relationship between the first set of sampling points comprises:

   determining the transformation relationship between the first set of sampling points based on the positional relationship between the first set of sampling points, wherein the transformation relationship comprises at least a translation transformation relationship and a rotation transformation relationship; and
   determining the second constraint between the set of nodes based on the transformation relationship between the first set of sampling points.

7. The method (200) according to Claim 5, wherein determining the second constraint between the set of nodes based on the positional relationship between the first set of sampling points comprises:

   determining the curvature of an osculating circle of the at least three first sampling points based on the positional relationship between at least three first sampling points in the first set of sampling points; and

determining the second constraint between at least three nodes corresponding to the at least three first sampling points based on the curvature.

8. The method (200) according to any one of Claims 2-7, wherein attributes of the set of nodes comprise translation parameters and rotation parameters of the first set of sampling points.

9. The method (200) according to Claim 1, wherein updating (206) the first set of sampling points on the map based on the positional relationship between the first set of sampling points and the second set of sampling points comprises:

determining a reference line for a road related to the lane line on the map;

establishing an expression of the first set of sampling points based on the first transformation relationship between the set of reference points on the reference line and the first set of sampling points on the lane line;

updating the parameters in the expression for the first set of sampling points based on the positional relationship between the first set of sampling points and the second set of sampling points, wherein the parameters are related to the first transformation relationship.

10. The method (200) according to Claim 9, updating the parameters in the expression of the first set of sampling points based on the positional relationship between the first set of sampling points and the second set of sampling points comprises:

establishing a graph based on a set of attributes of the first set of sampling points and a set of attributes of the second set of sampling points, the first set of sampling points corresponding to a set of nodes of the graph;

determining a first constraint of the set of nodes based on the positional relationship between the first set of sampling points and the second set of sampling points; and

iteratively performing graph optimization based on the first constraint to update the parameters in the expression of the first set of sampling points until the first constraint converges.

11. The method (200) according to Claim 10, further comprising:

determining a second constraint between the set of nodes based on the positional relationship between the first set of sampling points;

wherein iteratively performing graph optimization based on the first constraint to update the parameters in the expression of the first set of sampling points comprises: iteratively performing graph optimization based on the first constraint and the second constraint to update the parameters in the expression of the first set of sampling points until the first constraint and the second constraint converge.

12. The method (200) according to Claim 10, wherein determining the second constraint between the set of nodes based on the positional relationship between the first set of sampling points comprises:

determining the first sampling point in the first region and the last sampling point in the second region, the first region being the region where the vehicle is located and the second region being the previous region the vehicle passed through; and

determining the second constraint between the node corresponding to the first sampling point and the node corresponding to the last sampling point based on the positional relationship between the first sampling point and the last sampling point.

13. The method (200) according to Claim 9, wherein the first transformation relationship comprises a rotation relationship and/or a translation relationship, and the method further comprises:

determining the set of reference points in the reference line;

determining a set of attributes of the set of reference points and a set of attributes of the first set of sampling points; and

establishing the rotation relationship and/or the translation relationship between the set of reference points and the first set of sampling points based on a set of attributes of the set of reference points and a set of attributes of the first set of sampling points.

14. The method (200) according to Claim 9, wherein the parameters of the first transformation relationship comprise parameters in a set of transformation matrices between the set of reference points and the first set of sampling points, and the method further comprises:

determining a plurality of transformation matrices that satisfy a similarity condition in the set of transformation matrices;

determining a target transformation matrix based on the plurality of transformation matrices that satisfy the similarity condition; and

establishing an expression for a plurality of first sampling points based on the target transformation matrix and the corresponding plurality of reference points.

15. The method (200) according to any one of Claims 9-14, wherein the reference line comprises the center line of the road in the map.

16. The method (200) according to Claim 9, wherein obtaining a first set of sampling points (202) of the lane lines from the map comprises:

acquiring a sub-map of the region where the vehicle is located based on the regional division granularity of the map;

determining a first lane line on the sub-map, the first lane line being the description data of the lane line on the sub-map; and

acquiring the first set of sampling points in the first lane line based on a pre-set first sampling strategy.

17. The method (200) according to Claim 16, further comprising:

determine a first reference line on the sub-map, the first reference line being the description data of the reference line on the sub-map; and

acquiring the set of reference points in the first reference line based on a pre-set third sampling strategy, the first sampling strategy corresponding to the third sampling strategy;

wherein establishing an expression for the first set of sampling points based on a first transformation relationship

between the set of reference points on the reference line and the first set of sampling points on the lane line comprises: establishing an expression of the first set of sampling points based on the first transformation relationship between the set of reference points on the first reference line and the first set of sampling points on the first lane line.

18. The method (200) according to Claim 16, wherein acquiring (204) a second set of sampling points of the lane lines in the driving scenario based on vehicle sensor information comprises:

determining a second lane line in the sensor information, the second lane line being the description data of the lane line in the sensor information; and

acquiring the second set of sampling points in the second lane line based on a pre-set second sampling strategy, the first sampling strategy corresponding to the second sampling strategy.

19. The method (200) according to Claim 18, wherein the first lane line is acquired from a first set of lane lines associated with the map, the second lane line is acquired from a second set of lane lines associated with the sensor information, and the method (200) further comprises:

determining whether the first lane line and the second lane line are associated with the same actual lane line; and

in response to the first lane line and the second lane line being associated with the same actual lane line, determining that the first lane line and the second lane line are matched, wherein the matched first lane line and the second lane line are used to sample the first set of sampling points and the second set of sampling points, respectively.

20. An apparatus (800) for updating lane lines on a map, comprising:

an acquisition module for a first set of sampling points (802) configured to acquire a first set of sampling points of the lane lines from the map;

an acquisition module for a second set of sampling points (804) configured to acquire a second set of sampling points of the lane lines in a driving scenario based on vehicle sensor information; and
a module for updating a first set of sampling points (806) configured to update the first set of sampling points on the map based on the positional relationship between the first set of sampling points and the second set of sampling points.

21. A controller (108), comprising:

   at least one processor, and
   a memory, coupled to the at least one processor, and having instructions stored thereon, wherein the instructions, when executed by the at least one processor, cause the controller to perform the method according to any one of Claims 1-19.

22. A vehicle, comprising:

   the controller (108) according to Claim 21; and
   sensors for acquiring the sensor information of the vehicle.

23. A machine program product, comprising a machine program, wherein the machine program is executed by a processor to implement the method according to any one of Claims 1-19.

FIG. 1

200

202

204

206

FIG. 2

FIG. 3A

FIG. 3B

400

FIG. 4

500A

FIG. 5A

FIG. 5B

600A

a3

a2

a1

r

FIG. 6A

FIG. 6B

FIG. 7

FIG. 8

FIG. 9

## EUROPEAN SEARCH REPORT

**Application Number**

EP 25 22 0727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 134 627 A1 (NISSAN MOTOR [JP]; RENAULT SAS [FR]) 15 February 2023 (2023-02-15) * paragraphs [0025], [0034] - [0043], [0068] - [0079]; claim 1; figures 1-6B * ----- | 1,20-23 | INV. G01C21/00 |

**TECHNICAL FIELDS SEARCHED (IPC)**

G01C

The present search report has been drawn up for all claims

| Place of search | Date of completion of the search | Examiner |
|---|---|---|
| The Hague | 20 May 2026 | Tabellion, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 22 0727

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2026

| Patent document cited in search report | | Publication date | Patent family member(s) | | Publication date |
|---|---|---|---|---|---|
| EP 4134627 | A1 | 15-02-2023 | CN | 115427759 A | 02-12-2022 |
| | | | EP | 4134627 A1 | 15-02-2023 |
| | | | JP | 7349561 B2 | 22-09-2023 |
| | | | JP | WO2021205193 A1 | 14-10-2021 |
| | | | US | 2023152120 A1 | 18-05-2023 |
| | | | WO | 2021205193 A1 | 14-10-2021 |

EPO FORM P0459

For more details about this annex : see Official Journal of the European Patent Office, No. 12/82